**Europäisches Patentamt**

**European Patent Office**

**Office européen des brevets**

(19)

(11) Veröffentlichungsnummer: **0 086 814 B2**

(12)  # NEUE EUROPÄISCHE PATENTSCHRIFT

(45) Veröffentlichungstag der neuen Patentschrift:
**19.06.91 Patentblatt 91/25**

(51) Int. Cl.⁵ : **G02B 21/00, G02B 21/24**

(21) Anmeldenummer: **82902638.4**

(22) Anmeldetag : **25.08.82**

(86) Internationale Anmeldenummer :
**PCT/DE82/00169**

(87) Internationale Veröffentlichungsnummer :
**WO 83/00745 03.03.83 Gazette 83/06**

(54) DURCHLICHT- UND/ODER AUFLICHT-INVERSMIKROSKOP.

(30) Priorität : 26.08.81 DE 3133784
17.08.82 DE 3230504

(43) Veröffentlichungstag der Anmeldung :
31.08.83 Patentblatt 83/35

(45) Bekanntmachung des Hinweises auf die
Patenterteilung :
02.01.86 Patentblatt 86/01

(45) Bekanntmachung des Hinweises auf die
Entscheidung über den Einspruch :
19.06.91 Patentblatt 91/25

(84) Benannte Vertragsstaaten :
AT CH DE FR GB LI

(56) Entgegenhaltungen :
DE-A- 1 807 713
DE-A- 2 640 974
DE-A- 2 754 498
DE-A- 2 902 961
GB-A- 2 084 754
US-A- 3 405 989
US-A- 3 437 395

(56) Entgegenhaltungen :
MESSTECHNIK, vol. 80, no. 6, June 1972,
(Braunschweig, DE) H.A. Oehring, "Optische
Instrumente", see pages 171-177, particularly
page 175, paragraph 6; page 177; paragraph 4;
figures 13a-c, 15.
Prospekt Leitz "Optische Instrumente für Naturwissenschaften und Medizin", der Firma
Ernst Leitz GmbH Wetzlar (DE), 500-9a IX/69/-
Fy/MS
Gerätebild "Research II Metallograph" der
Firma Bausch & Lomb Scientific Instrument
Division, Rochester, New York, USA, 14602
Gerätebild "Balphot II Metallograph" der Firma Bausch & Lomb Scientific Instrument Division, Rochester, New York, USA, 14602
Prospekt der American Optical Scientific Instrument Division betr. Mikroskop "Univar" u.
Preisliste

(73) Patentinhaber : **ERNST LEITZ WETZLAR
GMBH**
Ernst-Leitz-Strasse 30 Postfach 20 20
W-6330 Wetzlar 1 (DE)

(72) Erfinder : REINHEIMER, Günter
Am Berg 11
W-6301 Biebertal 4 (DE)
Erfinder : GAUL, Norbert
Allmenröderstrasse 4
W-6336 Solms-Oberbiel (DE)

EP 0 086 814 B2

**Beschreibung**

Die Erfindung betrifft ein Inversmikroskop für Durchlicht-, Auflicht- oder kombinierte Durchlicht- und Auflicht-Beleuchtung.

Mikroskope nach der Bauart von le Chatelier, sog. « umgekehrte » oder « Invers »-Mikroskope, sind bereits bekannt. So wird in der Leitz-Firmendruckschrift : « Umgekehrtes Auflicht-Mikroskop LEITZ EPIVERT » (Listen-Nr. 111.520.036 b, Juni 1978) ein Invers-Mikroskop für Auflichtuntersuchungen beschrieben und dargestellt, dessen Grundkörper aus einem Stativfuß mit aufgesetztem Objektivrevolver, einem vertikalen, auf dem Stativfuß montierten Stativträger, dem ein höhenverstellbarer Objekttisch zugeordnet ist, einem auf dem Stativträger aufgesetzten Binokulargehäuse sowie einem an die Stirnseite des Stativfußes ansetzbaren Lampengehäuse besteht.

Aus der deutschen Gebrauchsmusterschrift DE-GM 7 628 471 ist auch bereits ein Lichtmikroskop inverser Bauart bekannt, das aus einem « U »-förmigen Grundkörper besteht, wobei auf dem einen « U »-Schenkel ein Binokulargehäuse, dessen Ansatzfläche in Höhe des Objekttisches vorgesehen ist, und an dem anderen « U »-Schenkel eine höhenverstellbare Durchlichtbeleuchtungseinrichtung kippbar angebracht ist. Ein Objektivrevolver befindet sich zwischen den « U »-Schenkeln und ist bezüglich des ortsfest gehaltenen Objekttisches verstellbar positioniert.

Aus der Zeiss (Jena)-Firmendruckschrift « TELA-VAL » (IV 14-18 Ag 29/166/69 9830) ist weiterhin ein Durchlicht-Inversmikroskop bekannt, dessen « L »-förmiger Grundkörper aus einem Stativfuß mit an dessen einer Seite aufgesetztem Objektivrevolver und an dessen anderer Seite aufgesetztem vertikalen Stativträger besteht, wobei auf der Stativträger-Oberseite ein Binokulargehäuse und eine Halterung für eine Beleuchtungseinrichtung vorgesehen sind. Der Objekttisch ist höhenverstellbar an dem Stativträger angeordnet.

Auch ist aus der Reichert-Firmendruckschrift « BIOVERT » (23, 11 1. BIOVERT K I-II D 4/71) ein Durchlicht-Inversmikroskop bekannt, welches aus einem kompakten, quaderförmigen, auf einer Fußplatte ruhenden Grundkörper besteht, auf dessen oberer Abschlußfläche ein Foto-Binotubus angeordnet ist, dessen Ansatz-Fläche etwa in der Objekttisch-Ebene liegt.

Schließlich ist aus der Olympus-Firmendruckschrift « OLYMPUS Inverted Tissue Culture Microscope IMT » (M 35 E-676B) eine Einrichtung bekannt, die hinsichtlich ihrer prinzipiellen Baukonzeption mit den weiter oben bereits erwähnten bekannten Mikroskoptypen im wesentlichen übereinstimmt.

Den bekannten Inversmikroskopen haften – in Kombination oder einzeln – die folgenden Nachteile an :

1) Dem Beobachter wird in Arbeitsposition der freie, ungehinderte Blick zum zu untersuchenden Präparat bzw. zur Objektebene durch die bei diesem bekannten Bauprinzip aus gerätegeometrischen Anordnungen, beispielsweise
   a) des Binokulargehäuses (Olympus, Leitz),
   b) der an dem Fotostutzen des Binokulargehäuses adaptierten mikrofotografischen Zusatzeinrichtungen (Reichert) oder
   c) der Halterungen für Durchlichtbeleuchtungseinrichtungen, die auf dem Stativträger montiert sind (Zeiss-Jena), oder
   d) des Stativträgers selbst (Leitz, Zeiss-Jena), verwehrt bzw. zumindest erschwert.

2) Es besteht keine direkte Hantier- und Manipuliermöglichkeit mit bzw. an dem zu untersuchenden Objekt aus beobachterseitiger Richtung.

3) Anflanschbare oder einkippbare Durchlichtbeleuchtungseinrichtungen bzw. ansetzbare Auflichtbeleuchtungseinrichtungen sind derart positioniert, daß sie entweder in relativ geringem Abstand zum Beobachter und/oder zum mikroskopischen Objekt angeordnet sind, was insbesondere ein routinemäßiges Langzeit-Mikroskopieren erschwert und außerdem zu unerwünschten Beeinflussungen von speziellen biologischen Präparaten (Kulturen etc.) infolge Wärmeentwicklung führen kann, oder an den zum Beobachter weisenden Fußteil des Gesamtgerätes seitlich angeflanscht sind, was zu einer erheblichen Einschränkung freier und ergonomiegerechter Mikroskopierpositionen des Beobachters vor allem während des Dauerbetriebs sowie zu einer Behinderung beim Manipulieren am und mit dem Objekt bzw. beim routinemäßigen Ausführen der üblichen Mikroskopbedienfunktionen führt.

Aus der US-A-3 405 989 ist ein reines Anflicht-Inversmikroskop mit nach vorne offenem grimdanfban bekannt.

Es ist die Aufgabe der vorliegenden Erfindung, ein universell einsetzbares und auf einer neuartigen Gerätekonzeption beruhendes Inversmikroskop mit Durchlicht- oder Auflicht- oder kombinierter Durchlicht- und Auflichtbeleuchtung zu schaffen, das dem in Mikroskopierposition befindlichen Beobachter einen ungehinderten, direkten Blick zum Objekt sowie ein direktes, unbehindertes, beobachterseitiges Hantieren mit dem Objekt bzw. Manipulieren an dem Objekt ermöglicht.

Diese Aufgabe wird bei kombinierten Durchlicht- und Auflicht-Inversmikroskopen der im Oberbegriff des Patentanspruchs 1 genannten Art durch die im Kennzeichen dieses Anspruchs genannten Merkmale gelöst. Die Aufgabe wird bei einem Durchlich Inversmikroskop der im Oberbegriff des Patentanspruchs 2 genannten Art durch die im Kennzeichen dieses Anspruchs genannten Merkmale gelöst. Weitere Ausgestaltungen der vorliegenden Erfindung sind in den Patentansprüchen 3-27 beschrieben.

In den Zeichnungen werden Ausführungsbeispiele der vorliegenden Erfindung schematisch dargestellt. Es zeigen:

Figur 1a : eine stark schematisierte Seitenansicht des « C »-förmigen Grundkörpers eines kombinierten Durchlicht- und/oder Auflicht-Inversmikroskops mit aufgesetztem, in der vertikalen optischen Achse positionierten Binokulargehäuse,

Figur 1b : eine stark schematisierte Seitenansicht des « C »-förmigen Grundkörpers eines kombinierten Durchlicht- und/oder Auflicht-Inversmikroskops mit angesetztem, außerhalb der vertikalen optischen Achse positionierten Binokulargehäuse ;

Figur 2 : den prinzipiellen konstruktiven und optischen Aufbau des erfindungsgemäßen kombinierten Durchlicht- und Auflicht-Inversmikroskops ;

Figur 3 : eine Durchlicht-Variante mit Spezialkondensor und einem ersten Aufsatz-Bauteil ;

Figur 4 : eine weitere Durchlicht-Variante mit einem zweiten Aufsatz-Bauteil ;

Figur 5a, 5b : ein Durchlicht- und/oder Auflicht-Inversmikroskop mit verschwenkbarem Oberteil in seinen beiden Arbeitspositionen ;

Figur 6a : eine schematische Detail-Seitenansicht einer im Stativfuß angeordneten Fluoreszenzilluminator-Baugruppe ;

Figur 6b : eine der Fig. 6a entsprechende Detail-Aufsicht unter Weglassung des Objektivrevolvers ;

Figur 6c : einen modularen Justiereinsatz.

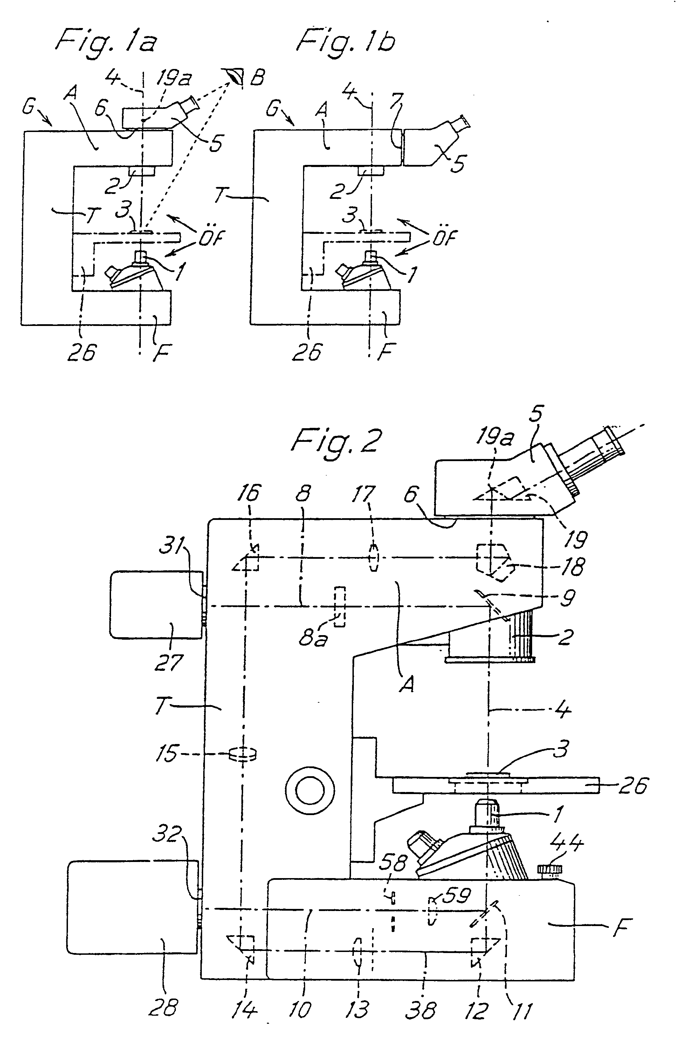

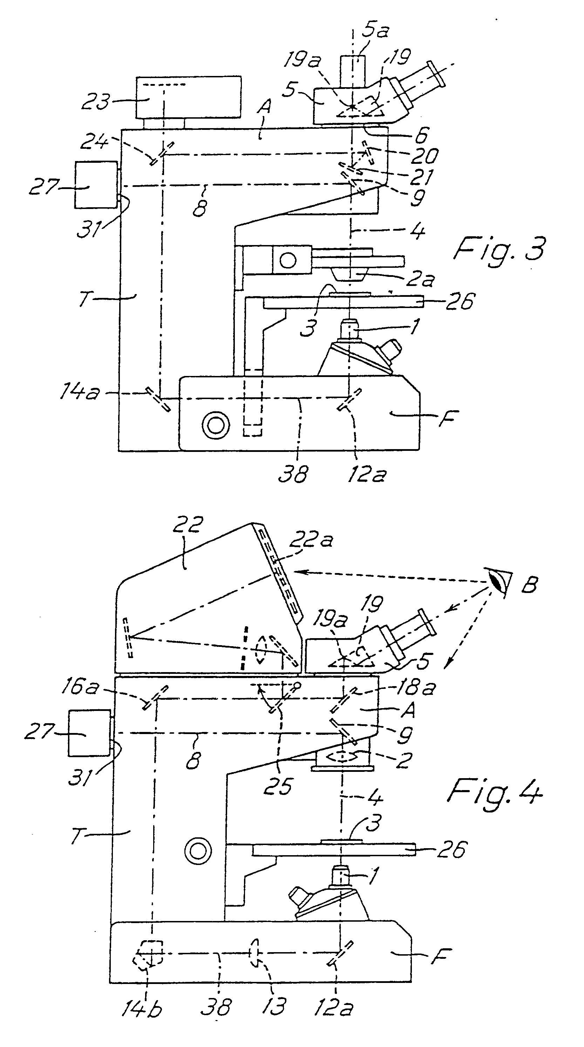

In Fig. 1a ist ein aus einem Stativfuß F, einem Stativträger T und einem Stativarm A bestehender Mikroskop-Grundkörper G dargestellt, der in der Seitenansicht die Form eines abgewinkelten « C » aufweist. Die freie Öffnung Öf des Grundkörpers G ist dem Betrachter B zugewandt. Ein Objekttisch 26 ist in an sich bekannter Weise entweder am Stativträger T oder auf dem Stativfuß F (siehe Fig. 3) höhenverschieblich gehalten. Unter Einbeziehung des Objekttisches 26 stellt das stark schematisierte Mikroskopgehäuse in Seitenansicht gewissermaßen ein « E » dar.

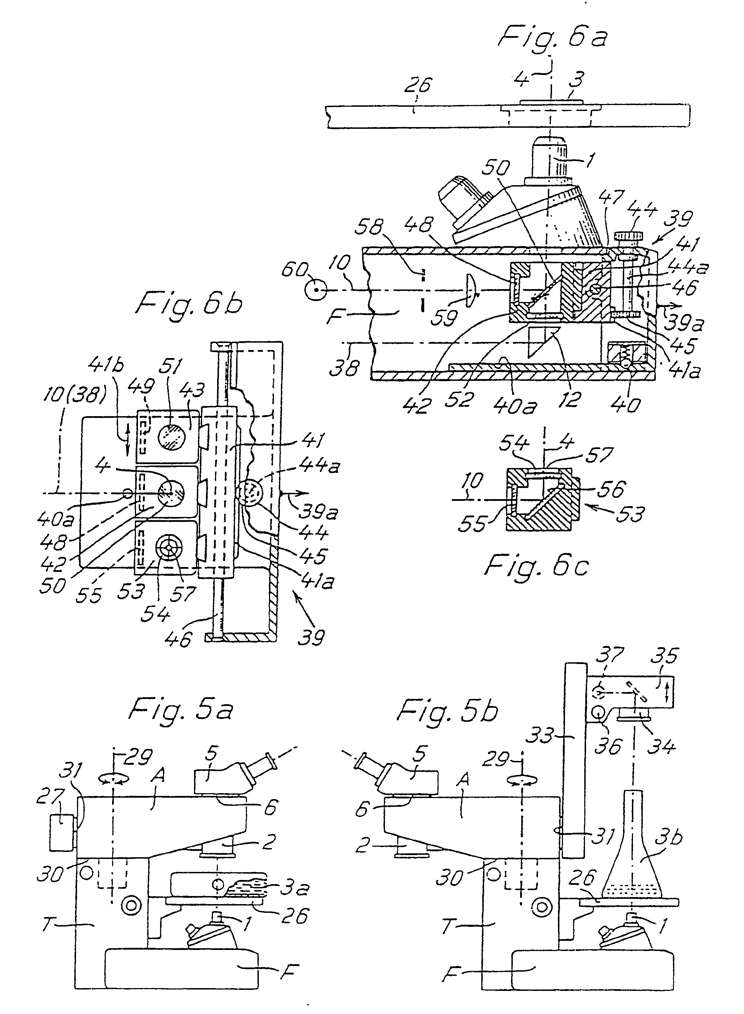

Obwohl in den Fig. 1a-1b der Mikroskop-Grundkörper G rechte Winkel zwischen dem Stativträger T und dem Stativfuß F bzw. dem Stativarm A aufweist, können auch abgerundete oder schwach bogenförmige oder von 90° abweichende Winkelbeträge zwischen den einzelnen Elementen T, F, A des Grundkörpers G vorgesehen sein. Auch ist es nicht unbedingt erforderlich, daß der Stativträger T und der Stativfuß F in zueinander parallelen Ebenen liegen. Aus ergonomischen und vor allem aus konstruktiven (Stabilitäts-) Gründen wird jedoch der Grundkörper G vorzugsweise aus einem horizontalen Stativfuß F, einem vertikalen Stativträger T und einem horizontal auskragenden Stativarm A bestehen. Dabei ist es möglich, daß der Grundkörper G einstückig (Fig. 1a, 1b) ausgebildet ist oder aus zwei Modulen (F, T + A ; vgl. Fig. 2-4) bzw. aus drei Modulen (F, T, A) besteht. Es ist auch möglich, den Stativträger T entweder auf der Oberseite des Stativfußes F (Fig. 4) oder partiell in und partiell auf dem Stativfuß F (Fig. 2, 3) anzuordnen. Analoges gilt für den Ansatzbereich zwischen dem Stativträger T und dem Stativarm A.

Die aus den Fig. 1a und 1b ersichtliche, grundsätzlich neue Idee bezüglich der Bauteil-Anordnung liegt jedoch darin, daß in der vorzugsweise vertikal verlaufenden optischen Achse 4 des Mikroskops, die durch das Objektiv 1 und das zentrisch positionierte mikroskopische Objekt 3 definiert wird, auch der Kondensor 2 (Fig. 1a : Durchlicht-Inversvariante bzw. kombinierte Durchlicht/Auflicht-Inversvariante) liegen. Unter « optisch wirksamen Zentrum » 19a wird hierbei der Punkt verstanden, an welchem das in das Binokulargehäuse 5 gelangende Abbildungsstrahlenbündel erstmalig teilweise (Fig. 3) oder ganz (Fig. 2, 4) reflektiert wird, um nach – eventuell erforderlich werdender – nochmaliger Totalreflexion in das (die) eigentliche(n) Okularrohr (Binokularrohre) zu gelangen. Bei einer bevorzugten Ausführungsform der Durchlicht- bzw. der kombinierten Durchlicht-Auflichtvariante (Fig. 1a) ist zusätzlich zu der Reihenfolge (von unten nach oben) : Objektiv 1 – Objekt 3 – Kondensor 2 noch das Binokulargehäuse 5, und zwar mit seinem optisch wirksamen Zentrum 19a bzw. dem Zentrum seiner Aufsatzanschlagfläche 6, oberhalb des Kondensors 2 entlang der optischen Achse 4 des Mikroskops angeordnet.

Fig. 1b zeigt eine prinzipiell mögliche Variante, wobei die Ansatzanschlagfläche 7 vom hier nicht dargestellten Abbildungsstrahlenbündel zentrisch durchsetzt wird Die beiden Varianten (Fig. 1a-1b) sind so konzipiert, daß das Binokulargehäuse 5 oberhalb der Ebene des Objekttisches 26 angeordnet ist und daß der Beobachter B in ergonomisch optimaler Sitzposition wechselweise das mikroskopische Bild im Binokular 5 oder aber das zu mikroskopierende Objekt 3 auf dem Objekttisch 26 beobachten kann, ohne seine einmal eingenommene Mikroskopier-Haltung in für ihn nachteiliger Weise zu verändern. Von besonderer Wichtigkeit ist darüberhinaus, daß auch apparative und manuelle Präparatmanipulationen, wie Umrühren, Hinzugabe (Entnahme) von Substanzen zum (vom) Präparat, Selektieren von Substanzgemischen, Kennzeichnen von Objektdetails, Direktbeobachten von Küvettendurchflüssen, Schnellwechseln von Präparaten bei Routineuntersuchungen, Direktbeobachten von Seigerungsvorgängen und Auskristallisationen in wässrigen Lösungen, Schnell-Positionieren von großvolumigen Präparatbehältnissen auf dem Objekttisch 3 usw. von der freien Öffnungsseite Öf aus vom Beobachter B selbst ohne Aufgabe bzw. Veränderung seiner ergonomischen Sitzposition vorgenommen werden können.

In Fig. 2 sind die Beleuchtungsstrahlengänge für die Durchlicht- und die Auflichtvariante sowie der Abbildungsstrahlengang schematisch dargestellt. Dabei wurden lediglich die wichtigsten strahlenquerschnittsverändernden und strahlenumlenkenden Bauteile eingezeichnet. Es ist natürlich auch möglich, anstelle der gezeigten Bauteile gleichwirkende Elemente vorzusehen. Dies wird beispielsweise in den ansonsten analogen Strahlengangsverläufen in den Fig. 2-4 skizziert. In Fig. 2 ist am vom Betrachter B wegweisenden oberen Teil des Stativträgers T bzw. am rückwärtigen Teil des Stativarms A eine Durchlichtbeleuchtungseinheit 27 über eine beobachterferne Anflanschstelle 31 mechanisch und/oder elektrisch mit dem Grundkörper G verbunden. Das von einer nicht mit dargestellten Lichtquelle ausgehende Beleuchtungsstrahlenbündel 8 trifft auf ein als Vollspiegel ausgebildetes erstes Umlenkelement 9, das sich in 45°-Stellung in der vertikalen optischen Achse 4 des Mikroskops befindet, und von dort nach Durchtritt durch einen an der Unterseite des Stativarms A angebrachten Kondensor 2 auf das auf dem Objekttisch 26 liegende Objekt 3. Das vom Objekt 3 ausgehende Abbildungsstrahlenbündel passiert nach Verlassen des Objektivs 1 einen ersten Teilerspiegel 11, der für die Umlenkung des Auflichtbeleuchtungsstrahlengangs 10 vorgesehen ist, und wird danach durch ein zweites Umlenkelement 12, das als Glasprisma oder als Vollspiegel 12a (Fig. 3) ausgebildet sein kann, in Richtung des mit der Bezugsziffer 38 ausgewiesenen Teilabschnitts im Stativfuß F geführt, wo es nach erneuter Richtungsänderung durch ein drittes Umlenkelement 14, das anstelle des gezeigten Glasprismas auch ein Vollspiegel 14a (Fig. 3) oder ein Pentaprisma 14b (Fig. 4) sein kann, den Stativträger T durcheilt. Von dort erfolgt mittels eines vierten Umlenkelementes 16, das auch ein Teilerspiegel 24 (Fig. 3) oder ein Vollspiegel 16a (Fig. 4) sein kann, eine erneute Knickung des Abbildungsstrahlenganges in Richtung eines in der optischen Achse 4 angeordneten fünften Umlenkelements 18. Es ist hervorzuheben, daß es erforderlich ist, an einer und nur an einer der Abbildungsstrahlengang-Knickstellen, an denen (in Fig. 2) die Bauelemente 12, 14, 16 bzw. 18 angeordnet sind, ein Pentaprisma (in Fig. 2 : Position 18, in Fig. 4 : Position 14b) oder eine gleichwirkende Spiegelkombination (in Fig. 3 : sechstes und siebtes Umlenkelement 20 + 21) vorzusehen.

Nach 90°-Umlenkung des Abbildungsstrahlenbündels in Richtung der – im dargestellten Fall vertikalen – optischen Achse 4 tritt es zentrisch durch die Aufsatzanschlagfläche 6 des Binokulargehäuses 5 und gelangt nach Totalreflexion an der größeren Kathetenfläche (« Zentrum » 19a) und erneuter Reflexion an der Hypothenusenfläche des Umlenkprismas 19 in den eigentlichen Binokulartubus. Anstelle der Totalreflexion an der größeren Kathetenfläche des Umlenkprismas 19 tritt eine Strahlaufspaltung, sofern der Binokulartubus 5 mit einem Fotostutzen 6a versehen ist und eine mikrofotografische oder fotometrische Auswertung des mikroskopischen Bildes beabsichtigt ist.

Bei den in den Fig. 1b und 1c dargestellten Invers-Varianten tritt das das Umlenkelement 16 bzw. 16a bzw. 24 verlassende Abbildungsstrahlenbündel an der beobachterseitigen Stirnseite des Stativarms A zentrisch durch die Ansatzanschlagfläche 7 des Binokulargehäuses 5 und wird von dort über nicht mit dargestellte Umlenkelemente in die Binokularrohre weitergeleitet.

Das Auflichtbeleuchtungsstrahlenbündel geht von einer nicht dargestellten Lichtquelle aus, die sich in der Beleuchtungseinheit 28 befindet, welche über eine beobachterferne Anflanschstelle 32 mechanisch und elektrisch mit dem Mikroskop-Grundkörper G verbunden ist. Beide Beleuchtungseinheiten 27 und 28 können austauschbar adaptiert sein und intern bzw. extern mit Energie versorgt werden, wie es beispielsweise in der DE-OS 29 02 961 beschrieben ist. Das Auflichtbeleuchtungs-Teilstrahlenbündel 10 wird über ein in der optischen Achse 4 angeordneten ersten Teilerspiegel 11 in das Objektiv 1 und von dort aus auf das Objekt 3 weitergeleitet.

Im Auflichtbeleuchtungs-Teilstrahlenbündel 10 sind in an sich bekannter Weise Blenden (z.B. eine Leuchtfeldblende 58), Optiken (z.B. eine Optik 59) und Filtereinsätze (nicht dargestellt) vorgesehen. Auch kann zwischen dem ersten Teilerspiegel 11 und dem zweiten Umlenkelement 12 beispielsweise eine Einschubmöglichkeit für einen Analysator oder ein Bauelement zur Realisierung des Interferenzkontrastes vorgesehen sein. Ebenso ist es möglich bzw. erforderlich, im Durchlichtbeleuchtungs-Teilstrahlenbündel 8 entsprechende Filtereinschübe 8a (siehe Fig. 2) sowie Blenden und Optiken (nicht dargestellt) und im gesamten geknickten Abbildungsstrahlengang zwischen den Bauelementen 12, 12a einerseits und 18, 18a, 20 andererseits Optiken 13, 15 und 17 in geeigneter Weise vorzusehen.

Wie aus Fig. 3 ersichtlich, kann in Verlängerung des im Stativträger T verlaufenden Abbildungsstrahlengangs ein Kameraansatz 23 optisch angekoppelt werden, wenn anstelle des vierten Umlenkelements 16 bzw. 16a ein in den Strahlengang einbringbarer zweiter Teilerspiegel 24 vorgesehen wird. Selbstverständlich ist dies auch an anderer Stelle möglich, beispielsweise zwischen den Umlenkelementen 16a und 18a. Im in Fig. 4 dargestellten Fall wird mittels eines klappbar angeordneten Teilerspiegels 25 ein Teil des Abbildungsstrahlenbündels in einen Projektionsaufsatz 22 abgezweigt, dessen Mattscheibe 22a für den Beobachter B ebenfalls ungehindert und direkt und ohne Veränderung der ergonomisch optimalen Mikroskopierposition einsehbar ist.

Anstelle der in den Fig. 3 und 4 gezeigten optischen Abzweigstellen (bei 24 bzw. 25) sind indes auch andere oder zusätzliche Ausspiegelungs- bzw. Einspiegelungs-Schnittstellen möglich. Wenn beispielsweise – wie in Fig. 4 dargestellt – der Aufbau lediglich als Durchlicht-Inversvariante konzipiert ist, kann bereits in Verlängerung des Abbildungs-Teilstrahlenganges an der vom Beobachter B abgewandten Seite des Stativfußes F eine weitere Kamerabaugruppe (Filmkamera, Sofortbildkamera u. a.) adaptiert werden. Aber auch im Bereich des vertikalen Stativträgers T ist eine optische Abzweigvorrichtung, etwa für eine TV-Kamera, möglich. In jedem Fall ist es aber aus ergonomischen Gründen strikt zu vermeiden, seitliche Ansatzmodule im beobachternahen Bereich vorzusehen.

In Fig. 3 ist anstelle des in Fig. 2 und Fig. 4 gezeigten einfachen, herausnehmbar gehalterten Übersichtskondensors 2 ein hochaperturiger Spezialkondensor 2a dargestellt, der in einer am Stativträger T oder am Objekttisch 26 angebrachten Zusatzhalterung befestigt ist. Wenngleich bislang die Baugruppe 5 einheitlich als Binokulargehäuse bezeichnet wurde, ist es indes auch möglich, an dessen Stelle ein Monokular- oder ein Triokulargehäuse, oder eine Diskussionsbrücke oder ein Zwischengehäuse, von dem aus der Beobachtungsstrahlengang in Richtung des Binokulargehäuses verläuft, oder desgleichen vorzusehen, bei welchen gleichermaßen auf deren jeweilige Ansatzanschlagfläche bzw. deren jeweiliges optisch wirksames Zentrum abzustellen ist.

Wie Fig. 5a erkennen läßt, kann mit der erfindungsgemäßen Neukonzeption der Inversmikroskope ein hoher Objekttisch-Raum für großvolumige Präparatbehältnisse genutzt werden, ohne daß die weiter oben bereits genannten fundamentalen Vorteile aufgegeben werden müßten.

Um jedoch auch extrem dimensionierte Präparatebehälter, wie Penizillin-Flaschen 3a, Erlenmeyerkolben 3b u.a., auf dem Objekttisch aufstellen bzw. auflegen zu können, kann – wie aus Fig. 5a und 5b ersichtlich – die Einrichtung auch so getroffen sein, daß zumindest eine Schwenkung des Stativarms A um eine Achse 29, die mit der Achse des den Stativträger T durchsetzenden Teils des Abbildungsstrahlenbündels zusammenfällt, vorgesehen ist. Die Schwenkebene befindet sich im dargestellten Fall an der Schnittstelle 30 zwischen Stativarm A und dem Stativträger T. Es ist indes auch möglich, daß die Schnittstelle zwischen dem orstfest verbleidenden Unterteil des Mikroskop-Grundkörpers G und dessen schwenkbarem Oberteil innerhalb desjenigen Bereichs des Stativträgers T liegt, dessen untere Grenze durch den in Minimaldistanz zum Objektiv 1 eingestellten Objekttisch 26 und dessen obere Grenze durch die Anflanschstelle 31 für die Durchlichtbeleuchtungs-Einheit 27 gegeben ist.

Während in Fig. 5a die Grundstellung gezeigt wird, die sich prinzipiell nicht von den in Fig. 2 und Fig. 4 gezeigten Anordnungen unterscheidet, wird in Fig. 5b eine 180°-Verschwenkung des Stativarms A dargestellt. An die Anflanschstelle 31 ist ein Distanzarm 33 angesetzt, der einen der Durchlichtbeleuchtungs-Einheit 27 analogen mechanischen und elektrischen Ankoppel-mechanismus aufweist. An der Distanzarm 33 kann nach Art einer optischen Bank eine höhenverstellbare spezielle Durchlichtbeleuchtungseinrichtung 35 angesetzt werden, die eine Lichtquelle 37, ein Umlenkelement und eine Arretierschraube 36 umfaßt, und der ein zweiter Kondensor 34 nachgeordnet ist. Auch im in Fig. 5b dargestellten Fall (Durchlicht-Beleuchtungsvariante) ist die Reihenfolge (von unten nach oben) : Objektiv 1 – Objekt 3b – Kondensor 34 beibehalten worden. Wenn man lediglich die Auflicht-Inversvariante apparativ realisieren will, so genügt bereits ein geringes Verschwenken des drehbaren Oberteils, da dann der Kondensor 34 entfällt und gewissermaßen durch das als Kondensor wirkende Objektiv 1 ersetzt wird. Bei nur geringem Verschwenken des Oberteils kann dann vorteilhafterweise die Direktbeobachtung des Objektes 3a bzw. 3b vollständig beibehalten sowie alle gängigen Präparathantierungen und Objektmanipulationen vom Beobachter direkt vorgenommen werden.

In dem Stativfuß F kann zusätzlich eine Auflichtfluoreszenzanordnung realisiert sein. Dies wird in den Fig. 6a und 6b näher erläutert.

In Fig. 6a wird der beobachterseitige Teil des Stativfußes F mit aufgesetztem Objektivrevolver und darüber angeordnetem Objekttisch 26 in Seitenansicht dargestellt. In einer als Schublade ausgebildeten Halterung 39, die beispielsweise mittels eines Antriebsknopfes 44 oder einer nicht dargestellten Handhabe in Beobachterrichtung (in Richtung des Pfeiles 39a) aus dem Stativfuß F herausgezogen werden kann, sind Mittel zum positionsgerechten Aufnehmen und Verschieben (in Richtung des Pfeiles 41b) von als Bau- und Funktionseinheiten ausgebildeten Fluoreszenzeinheiten 42 bzw. 43 vorgesehen. Diese Mittel umfassen neben dem Antriebsknopf 44 ein mit diesem über eine Welle 44a verbundenes Antriebsrad 45, das mit einer Zahnstange 41a zusammenwirkt, die mit einer auf einer Führungsstange 46 querverschieblich angeordneten Aufnahmehalterung 41 verbunden ist. An der Aufnahmehalterung 41 sind darüber hinaus mindestens drei Schwalbenschwanz-Ausnehmungen parallel zur vertikalen optischen Achse 4 vorgesehen, in die würfelförmige Fluoreszenzeinheiten 42, 43 austauschbar eingeschoben werden können. Sie bestehen jeweils aus einem Erregerfilter 48 bzw. 49, einem in 45°-Stellung befindlichen dichromatischen Teilerspiegel 50 bzw. 51 sowie einem Sperrfilter 52 (das zur Fluoreszenzeinheit 43 gehörende Sperrfilter ist nicht dargestellt).

In Fig. 6b befindet sich die Fluoreszenzeinheit 42 zentrier- und justiergenau in der optischen Achse 4 des Mikroskops. Die exakte Positionierung der Fluoreszenzeinheiten 42, 43 wird durch nicht dargestellte Rastmittel bewirkt. Will man – wie es für Mehrfachfluorochromierungstechniken erforderlich ist – andere aufeinander abgestimmte Fluoreszenzeinheiten in den Strahlengang 10 (und teilweise : 4) einbringen, so gelingt dies durch einfaches Herausziehen der Halterung 39 in Richtung des Pfeiles 39a, die zu diesem Zweck mit Rastmitteln 40, 40a ausgestattet ist, und durch unkompliziertes und schnelles Auswechseln der (des) entsprechenden Fluoreszenz-Würfel(s) Die Halterung 39 kann sodann bis zur Anschlagkante 47 wieder in den Stativfuß F eingeschoben werden, wodurch eine exakte Zuordnung zur optischen Achse 4 des Mikroskops gewährleistet ist.

Zur Einjustierung einer speziellen Fluoreszenzbeleuchtungseinheit, die anstelle der üblichen Auflicht-Beleuchtungseinheit 28 an die Anflanschstelle 32 angesetzt werden kann, ist ein Justiereinsatz 53 vorgesehen, der in einen der in der Aufnahmehalterung 41 vorgesehenen Schwalbenschwänze austauschbar eingesetzt bzw. dort ständig deponiert werden kann. Der Justiereinastz 53 ist in Fig. 6c dargestellt. In seiner äußeren Raumform gleicht er den Fluoreszenzeinheiten 42, 43. Anstelle des Erregerfilters 48 bzw. 49 befindet sich ein Lichtdämpfungsfilter 55 und anstelle des dichromatischen Teilerspiegels 50 bzw. 51 befindet sich ein (Voll-) Spiegel 56. Den objektivseitigen Abschuß bildet eine Mattscheibe 54 mit einer Zentriermarke 57. Ein von der Fluoreszenzlichtquelle 60 ausgehendes und entlang der Achse 10 verlaufendes Beleuchtungsstrahlenbündel passiert nach Verlassen der Leuchtfeldblende 58 eine Optik 59, die die Leuchtfeldblende 58 in das Objekt 3 abbildet. Die Lampenwendel oder der Lichtbogen der Lichtquelle 60 wird auf die Zentriermarke 57 abgebildet. Das Lichtdämpfungsfilter 55 dient dazu, eventuelle Überstrahlungen zu vermeiden. Die Justierung der Lichtquelle 60 nimmt der Beobachter B bei herausgezogener Halterung 39 vor, indem er direkt auf die Mattscheibe 54 schaut und eventuelle Dejustierungen korrigiert. Dazu ist es natürlich zunächst erforderlich, den Justiereinsatz 53 in eine durch die Achse 10 definierte Position zu bringen.

Die Vorteile dieser Fluoreszanzanordnung für Inversmikroskope bestehen vor allem darin, daß das fluoreszierende Objekt sehr tief – bezüglich der ergonomisch günstigen Mikroskopierposition des Beobachters B – angebracht ist. Bei einem bekannten Inversmikroskop (DE-GM 76 28 471) ist es zwar möglich, in den Objektträger Fluoreszenzeinsätze einzubringen ; der Objekttisch ist jedoch, bedingt durch die gewählte Baukonzeption, sehr hoch angebracht, was für den Benutzer aus ergonomischer Sicht als nichtoptimale Lösung angesehen wird. Bei anderen Inversmikroskopen bekannter Bauart gelingt – wenn überhaut – eine Umrüstung für Fluoreszenzuntersuchungen nur, wenn aufwendige mechanische und optische Änderungen vorgenommen werden So ist es beispielsweise erforderlich, einen Objektträger gegen einen komplizierten Fluoreszenzilluminator auszutauschen und den Objekttisch höher anzuordnen, wodurch man beispielsweise bereits eingestellte Objektstellen aus dem Gesichtsfeld verliert.

Alle diese Nachteile werden durch die erfindungsgemäße Integration des Fluoreszenzbeleuchtungstraktes und eines Teils des Abbildungsstrahlengangs in den Stativfuß F vermieden.

Bezugszeichen- bzw. Bezugsziffern-Liste

T Stativträger
F Stativfuß
A Stativarm
G Mikroskop-Grundkörper (T + F + A)
Öf freie Öffnung von (G)
B Betrachter
1 Objektiv
2 Kondensor
2a Spezialkondensor
3, 3a, 3b Objekt
4 optische Achse des Mikroskops
5 Binokulargehäuse
5a Fotostutzen
6 Aufsatzanschlagfläche
7 Ansatzanschlagfläche
8 Durchlichtbeleuchtungs-Teilstrahlenbünbel
8a Filtereinschübe
9 erstes Umlenkelement
10 Auflichtbeleuchtungs-Teilstrahlenbündel
11 erster Teilerspiegel
12 zweites Umlenkelement (Umlenkprisma)
12a zweites Umlenkelement (Spiegel
13 erste Optik
14 drittes Umlenkelement (Umlenkprisma)
14a drittes Umlenkelement (Spiegel)
14b drittes Umlenkelement (Pentaprisma)
15 zweite Optik
16 viertes Umlenkelement (Umlenkprisma)
16a viertes Umlenkelement (Spiegel)
17 dritte Optik
18 fünftes Umlenkelement (Pentaprisma)
18a fünftes Umlenkelement (Spiegel)
19 Umlenkprisma in (5)
19a « optisch wirksames Zentrum » von (5)
20 sechstes Umlenkelement
21 siebtes Umlenkelement
22 Projektionsaufsatz
22a Mattscheibe von (22)
23 Kameraansatz
24 Strahlenteiler (zweiter Teilerspiegel)
25 Klapp-Teilerspiegel (dritter Teilerspiegel)
26 Objekttisch

27 Beleuchtungseinheit für Durchlicht
28 Beleuchtungseinheig für Auflicht
29 Schwenkachse des Stativarms (A)
30 Schnittstelle
31 Anflanschstelle für (27)
32 Anflanschstelle für (28)
33 Distanzarm
34 zweiter Kondensor
35 Durchlichtbeleuchtungs-Einrichtung
36 Distanzveränderungsmittel (Arretierschraube)
37 Lichtquelle in (35)
38 Abbildungs-Teilstrahlengang in (F)
39 Halterung (Schublade)
39a Pfeil (Herausziehrichtung von 39))
40, 40a Rastmittel
41 Aufnahmehalterung
41a Zahnstange
41b Pfeil (Verschieberichtung von (41))
42, 43 Fluoreszenzeinheiten
44 Antriebsknopf
44a Welle
45 Antriebsrad
46 Führungsstange
47 Anschlagkante
48, 49 Erregerfilter
50, 51 dichromatische Teilerspiegel
52 Sperrfilter
53 Justiereinsatz
54 Mattscheibe
55 Lichtdämpfungsfilter (Graufilter)
56 Spiegel
57 Zentriermarke
58 Leuchtfeldblende
59 Optik
60 Fluoreszenzlichtquelle

## Ansprüche

1. Kombiniertes Durchlicht- und Auflicht-Inversmikroskop, gekennzeichnet durch folgende Merkmale :

(a) einen Stativfuß (F) mit auf- oder eingesetztem Objektivrevolver (1),

(b) einen Stativträger (T) mit Mitteln zum Ansetzen optischer Baueinheiten,

(c) einen Stativarm (A) mit auf- oder ansetzbarem Okulargehäuse (5) und auf der Unterseite des Stativarms (A) angesetztem Kondensorsystem (2),

(d) einen dem Stativfuß oder dem Stativträger zugeordneten Objekttisch (26),

(e) der Stativträger (T) bildet zusammen mit dem Stativfuß (F) und dem auskragenden Stativarm (A) einen "C"-förmigen Mikroskop-Grundkörper (G),

(f) die freie Öffnung (Öf) des Mikroskop-Grundkörpers (G) ist zum Betrachter (B) hin gerichtet,

(g) das Auflicht-Beleuchtungsstrahlenbündel (10) und das Beobachtungsstrahlenbündel sind im Stativfuß (F) im Abstand und, im wesentlichen parallel zueinander geführt,

(h) das Durchlicht-Beleuchtungsstrahlenbündel (8) und das Beobachtungsstrahlenbündel sind im Stativarm (A) im Abstand und, im wesentlichen parallel zueinander geführt,

(i) das im Stativarm (A) verlaufende Teilstrahlenbündel (8) für die Durchlichtbeleuchtung wird über ein in der optischen Achse (4) des Mikroskops angeordnetes und vorzugsweise in 45°-Stellung zu diesem positioniertes erstes Umlenkelement (9) dem Kondensor (2 bzw. 2a) zugeführt,

(k) am oberen sowie am unteren Teil des Stativträgers (T) sind an dem vom Betrachter (B) wegweisenden Stativträger-Rücken elektrische und/oder mechanische Mittel (31 bzw. 32) für das Ansetzen je einer Beleuchtungs-Einheit (27 bzw. 28) vorgesehen,

(l) die durch den Kondensor (2, 2a) und das Objektiv (1) festgelegte optische Achse (4) des Mikroskops durchsetzt die Aufsatzanschlagfläche (6) eines Binokulargehäuses (5), das entweder auf der Oberseite (Fig. 1a) oder an der zum Betrachter (B) weisenden Stirnseite (Fig. 1b) des Stativarms (A) vorgesehen ist.

2. Durchlicht- Inversmikroskop, umfassend einen Stativfuß mit auf- bzw. eingesetztem Objektivrevolver, einen Stativträger mit Mitteln zum Ansetzen optischer Baueinheiten und einen dem Stativfuß bzw. dem Stativträger zugeordneten Objekttisch, **dadurch gekennzeichnet**, daß der Stativträger (T) zusammen mit dem Stativfuß (F) und einem auskragenden Stativarm (A) einen "C"-förmigen Mikroskop-Grundkörper (G) bildet, dessen freie Öffnung (Öf) zum Betrachter (B) hin gerichtet ist, der Stativarm (A) ein auf- bzw ansetzbares Okulargehäuse (5) und auf seiner Unterseite ein an- bzw. eingesetztes Kondensorsystem (2) aufweist, die durch den Kondensor (2, 2a) und das Objektiv (1) festgelegte optische Achse (4) des Mikroskops die Aufsatzanschlagfläche (6) eines Binokulargehäuses (5) zentrisch durchsetzt, das Durchlicht-Beleuchtungsstrahlenbündel (8) und das Beobachtungsstrahlenbündel im Stativarm (A) im Abstand und im wesentlichen parallel zueinander geführt sind, das im Stativarm (A) verlaufende Teilstrahlenbündel (8) für die Durchlichtbeleuchtung über ein in der optischen Achse (4) des Mikroskops angeordnetes und vorzugsweise in 45°-Stellung zu dieser positioniertes erstes Umlenkelement (9) dem Kondensor (2 bzw. 2a) zugeführt wird und am oberen Teil des Stativträgers (T) an dem vom Betrachter (B) wegweisenden Stativträger-Rücken elektrische und/oder mechanische Mittel (31) für das Ansetzen einer Beleuchtungs-Einheit (27, Fig. 3) vorgesehen sind.

3. Inversmikroskop nach den Ansprüchen 1 bis 2 dadurch gekennzeichnet, daß der Stativträger (T) sowie die optische Achse (4) im wesentlichen jeweils vertikal und der Stativfuß (F) sowie der auskragende Stativarm (A) im wesentlichen jeweils horizontal verläuft und daß die Seitenansicht des Mikroskop-Grundkörpers (G) vorzugsweise einem abgewinkelten « C » entspricht.

4. Inversmikroskop nach mindestens einem der vorhergehenden Ansprüche, dadurch gekennzeichnet, daß anstelle des eine Aufsatz- bzw. Ansatzanschlagfläche (6 bzw. 7) aufweisenden Binokulargehäuses (5) ein Zwischengehäuse mit einer entsprechenden Aufsatz- oder Ansatzanschlagfläche vorgesehen ist, welches Ankopplungsmittel für das Binokulargehäuse (5) enthält.

5. Inversmikroskop nach mindestens einem der Ansprüche 1 bis 4, dadurch gekennzeichnet, daß das im Stativfuß (F) verlaufende Teilstrahlenbündel (10) für die Auflichtbeleuchtung über einen in der optischen Achse (4) des Mikroskops angeordneten und vorzugsweise in 45°-Stellung zu dieser positionierten Teilerspiegel (11) dem Objektiv (1) zugeführt wird (Fig. 2).

6. Inversmikroskop nach mindestens einem der Ansprüche 1 bis 4, dadurch gekennzeichnet, daß das vom Objekt (3, 3a, 3b) ausgehende Abbildungsstrahlenbündel nach Durchgang durch das Objektiv (1) und durch den Teilerspiegel (11) auf ein im Stativfuß (F) befindliches und in der optischen Achse (4) des Mikroskops angeordnetes zweites Umlenkelement (12 bzw. 12a) und sodann nach Passieren einer ersten Optik (13) auf ein drittes Umlenkelement (14 bzw. 14a bzw. 14b) trifft, von dem es entlang dem Stativträger (T) über eine zweite Optik (15) auf ein im Stativarm (A) befindliches viertes Umlenkelement (16 bzw. 16a) weitergeleitet und nach Passieren einer dritten Optik (17) über ein fünftes Umlenkelement (18 bzw. 18a), das in der optischen Achse (4) zwischen der Aufsatzanschlagfläche (6) des Binokulargehäuses (5) und dem ersten Umlenkelement (9) positioniert ist, in das im Binokulargehäuse (5) befindliche Umlenkprisma (19) gelenkt wird.

7. Inversmikroskop nach Anspruch 6, dadurch gekennzeichnet, daß anstelle des fünften Umlenkelements (18 bzw. 18a) ein sechstes Umlenkelement (20) außerhalb der optischen Achse (4) des Mikroskops angeordnet ist, von dem aus das Abbildungsstrahlenbündel auf ein siebtes Umlenkelement (21) fällt, das in der optischen Achse (4) zwischen dem ersten Umlenkelement (9) und der Aufsatzanschlagfläche (6) des Binokulargehäuses (5) unter einem Winkel, beispielsweise 67,5°, zur optischen Achse (4) angeordnet ist (Fig. 3).

8. Inversmikroskop nach einem der vorhergehenden Ansprüche, dadurch gekennzeichnet, daß innerhalb des Abbildungsstrahlenganges zwischen dem ersten Teilerspiegel (11) und dem Binokulargehäuse (5) Mittel zum optischen Abzweigen eines Teils des Abbildungsstrahlenbündels vorgesehen sowie Mittel zum Ankoppeln von separaten Bau- und Funktionseinheiten, wie Projektionsaufsatz (22), Kameraansätze (23) u. dgl., an bzw. auf dem Mikroskop-Grundkörper (G) angeordnet sind.

9. Inversmikroskop nach Anspruch 8, dadurch gekennzeichnet, daß die Mittel zum optischen Abzweigen mindestens einen Strahlenteiler (24 bzw. 25) umfassen, der zusätzlich in den Abbildungsstrahlengang einklappbar bzw. einschiebbar ist.

10. Inversmikroskop nach einem der Ansprüche 8 und 9, dadurch gekennzeichnet, daß die Mittel zum Ankoppeln von auf- bzw. ansetzbaren Bau- und Funktionseinheiten auf bzw. am Stativarm (A) oder am Stativträger (T) angeordnet sind und daß diese Bau- und Funktionseinheiten über einen bewegbaren Teilerspiegel (25) als Strahlenteiler, welcher zwischen dem vierten Umlenkelement (16 bzw. 16a) und dem (den) in der optischen Achse (4) des Mikroskops positionierten Umlenkelement(en) (18 bzw. 18a bzw. 21) in das Abbildungsstrahlenbündel einbringbar ist, optisch mit dem mikroskopischen Strahlengang verbunden werden (Fig. 4).

11. Inversmikroskop nach einem der Ansprüche 8 bis 10, dadurch gekennzeichnet, daß die Abzweigung eines Teils des Abbildungsstrahlenbündels mittels eines Strahlenteilers (24) erfolgt, welcher an derjenigen Stelle im Schnittpunkt des vertikalen Stativkörpers (T) und des horizontalen Stativarms (A) austauschbar positioniert ist, an der ansonsten das vierte Umlenkelement (16 bzw. 16a) angeordnet ist (Fig. 3).

12. Inversmikroskop nach einem der Ansprüche 8 bis 10, dadurch gekennzeichnet, daß die Abzweigung eines Teils des Abbildungsstrahlenbündels im Bereich des Stativträgers (T), vorzugsweise zwischen dem dritten und dem vierten Umlenkelement (14, 14a, 14b und 16, 16a), erfolgt.

13. Inversmikroskop nach mindestens einem der Ansprüche 1 bis 4, dadurch gekennzeichnet, daß der Stativträger (T) mit dem Stativarm (A) einstückig ausgebildet ist.

14. Inversmikroskop nach mindestens einem der Ansprüche 1 bis 4, dadurch gekennzeichnet, daß der den Stativfuß (F), den Stativträger (T) und den Stativarm (A) umfassende Mikroskop-Grundkörper (G) einstückig ausgebildet ist.

15. Inversmikroskop nach einem der vorhergehenden Ansprüche, dadurch gekennzeichnet, daß Mittel zum Verändern des Relativabstandes zwischen dem Objekttisch (26) und dem Objektiv (1) vorhanden sind.

16. Inversmikroskop nach mindestens einem der vorhergehenden Ansprüche, dadurch gekennzeichnet, daß in dem Stativarm (A) eine einsetzbare Durchlichtbeleuchtungs-Einheit und in dem Stativfuß (F) eine einsetzbare Auflichtbeleuchtungs-Einheit vorgesehen sind.

17. Inversmikroskop nach Anspruch 16, dadurch gekennzeichnet, daß den Beleuchtungs-Einheiten Mittel für eine interne Energieversorgung zugeordnet sind.

18. Inversmikroskop nach Anspruch 16, dadurch gekennzeichnet, daß den inkorporierten Beleuchtüngs-Einheiten Mittel für eine externe Energieversorgung zugeordnet sind.

19. Inversmikroskop nach mindestens einem der vorhergehenden Ansprüche, dadurch gekennzeichnet, daß der Stativarm (A) um eine Achse (29) schwenkbar gelagert ist, die mit der Achse des den Stativträger (T) durchsetzenden Teils des bildungsstrahlenbündels zusammenfällt (Fig. 5a, 5b).

20. Inversmikroskop nach Anspruch 19 dadurch gekennzeichnet, daß die Schnittstelle (30) zwischen dem ortsfest verbleibenden Unterteil des Mikroskop-Grundkörpers (G) und dessen schwenkbarem Oberteil innerhalb desjenigen Bereiches des Stativträgers (T) liegt, dessen untere Grenze durch den in Minimaldistanz zum Objektiv (1) eingestellten Objekttisch (26) und dessen obere Grenze durch die Anflanschstelle (31) für die Durchlichtbeleuchtungs-Einheit (27) gegeben ist.

21. Inversmikroskop nach mindestens einem der vorhergehenden Ansprüche, dadurch gekennzeichnet, daß der Objekttisch (26) direkt auf dem Stativfuß (F) höhenverstellbar gehaltert ist (Fig. 3).

22. Inversmikroskop nach einem der Ansprüche 20 und 21, dadurch gekennzeichnet, daß sich die Schnittstelle (30) auf der Oberseite des Stativfußes (F) befindet.

23. Inversmikroskop nach mindestens einem der vorhergehenden Ansprüche, dadurch gekennzeichnet, daß an die Anflanschstelle (31) für die Durchlichtbeleuchtungs-Einheit (27) eine einen Distanzarm (33) aufweisende und einen zweiten Kondensor (34) enthaltende Durchlichtbeleuchtugs-Einrichtung (35) ansetzbar ist (Fig. 5b).

24. Inversmikroskop nach Anspruch 23, dadurch gekennzeichnet, daß vorzugsweise an der Durchlichtbeleuchtungs-Einrichtung (35) Mittel (36) zum Verändern der Distanz zwischen dem zweiten Kondensor (34) und dem Objekttisch (26) vorgesehen sind (Fig. 5b).

25. Inversmikroskop nach mindestens einem der Ansprüche 23 und 24, dadurch gekennzeichnet, daß Mittel für eine interne elektrische Energieversorgung der in der Durchlichtbeleuchtungs-Einrichtung (35) vorhandenen Lichtquelle (37) vorgesehen sind.

26. Inversmikroskop nach einem der vorhergehenden Ansprüche, dadurch gekennzeichnet, daß in dem Stativfuß (F) eine aus diesem herausziehbare Halterung (39) vorgesehen ist, der Mittel (41, 41a, 44, 44a, 45, 46) zum positionsgerechten Aufnehmen und Verschieben von als Bau- und Funktionseinheiten ausgebildeten Fluoreszenzeinheiten (42 bzw. 43) zugeordnet sind (Fig. 6b).

27. Inversmikroskop nach Anspruch 26, dadurch gekennzeichnet, daß die Fluoreszenzeinheiten (42 bzw. 43) zusammen mit einem ein Lichtdämpfungsfilter (55), einen Spiegel (56) und eine mit einer zentralen Marke (57) ausgestattete Mattscheibe (54) aufweisenden Justiereinsatz (53) in einer bezüglich der optischen Achse (4) querverschieblich (41b) gelagerten Aufnahme (41) austauschbar gehalten werden.

## Claims

1. Combined transmitted light and incident light inverse microscope, characterised by the following features :

(a) a stand foot (F) with superposed or inserted lens turret (1),

(b) a stand carrier (T) with means for the attaching of optical constructional elements,

(c) a stand arm (A) with superposable or attachable eyepiece housing (5) and condenser system (2) attached at the underside of the stand arm (A), (d) an object table (26) associated with either the stand foot or the stand carrier,

(e) the stand carrier (T) together with the stand foot (F) and the jutting-out stand arm (A) forms a C-shaped microscope base body (G),

(f) the free opening (Öf) of the microscope base body (G) is directed towards the observer (B),

(g) the incident light illumination ray bundle (10) and the observation ray bundle are conducted one substantially parallelly to and at a spacing from the other in the stand foot (F),

(h) the transmitted light illumination ray bundle (8) and the observation ray bundle are conducted one substantially parallelly to and at a spacing from other in the stand arm (A),

(i) the partial ray bundle (8), which extends in the stand arm (A), for the transmitted light illumination is conducted to the condenser (2 or 2a) by way of a first deflecting element (9) arranged in the optical axis (4) of the microscope and preferably positioned in a 45° setting to this,

(k) electrical and/or mechanical means (31 or 32) for the attachment of a respective illumination unit (27 or 28) are provided at the upper as well as the lower part of the stand carrier (T) at the stand carrier back pointing away from the observer (B), and

(l) the optical axis (4) of the microscope fixed by the condenser (2, 2a) and the objective (1) passes through the mounting abutment surface (6) of a binocular housing (5), which is provided either on the upper side (Fig. 1a) of the stand arm (A) or at that end face (Fig. 1b) of the stand arm (A), which faces the observer.

2. Transmitted light inverse microscope comprising a stand foot with superposed or inserted lens turret, a stand carrier with means for the attaching of optical constructional elements and an object table associated with either the stand foot or the stand carrier, characterised thereby, that the stand carrier (T) together with the stand foot (F) and the jutting-out stand arm (A) forms a "C"-shaped microscope base body (G), the free opening (Öf) of which is directed towards the observer (B), the stand arm (A) displays a superposable or attachable eyepiece housing (5) and a condenser system (2) attached or inserted at its underside, the optical axis (4) of the microscope fixed by the condenser (2, 2a) or the objective (1) passes centrally through the mounting abutment surface (6) of a binocular housing (5), the transmitted light illumination ray bundle (8) and the observation ray bundle are conducted one substantially parallelly to and at a spacing from the other in the stand arm (A), the partial ray bundle (8), which extends in the stand arm (A), for the transmitted light illumination is conducted to the condenser (2 or 2a) by way of a first deflecting element (9) arranged in the optical axis (4) of the microscope and preferably positioned in a 45° setting relative to this and electrical and/or mechanical means (31) for the attacment of an illumination unit (27, Fig. 3) are provided at the upper part of the stand carrier (T) at the stand carrier back pointing away from the observer (B).

3. Inverse microscope according to the claims 1 to 2, characterised thereby, that the stand carrier (T) as well as the optical axis (4) each extend substantially vertically and the stand foot (F) as well as the jutting-out stand arm (A) each extend substantially horizontally and that the side elevation of the microscope base body (G) preferably corresponds to an angular "C".

4. Inverse microscope according to at least one of the preceding claims, characterised thereby, that in place of the binocular housing (5) displaying a mounting abutment surface (6) or attachment abutment surface (7), an intermediate housing with a corresponding mounting abutment surface or attachment abutment surface is provided and contains coupling means for the binocular housing (5).

5. Inverse microscope according to at least one of the claims 1 to 4, characterised thereby, that the partial ray bundle (10) extending in the stand foot (F) for the incident illumination is conducted to the objective (1) by way of a divider mirror (11) arranged in the optical axis (4) of the microscope and preferably positioned in a 45° setting relative to this (Fig. 2).

6. Inverse microscope according to at least one of the claims 1 to 4, characterised thereby, that the imaging ray bundle emanating from the object (3, 3a, 3b) after passage through the objective (1) and through the divider mirror (11) impinges on a second deflecting element (12 or 12a), which is disposed in the stand foot (F) and arranged in the optical axis (4) of the microscope, and then after passing through a first optical system (13) impinges on a third deflecting element (14 or 14a or 14b), by which it is conducted further along the stand carrier (T) by way of a second optical system (15) onto a fourth deflecting element (16 or 16a) disposed in the stand arm (A) and after passing a third optical system (17) steered by way of a fifth deflecting element (18 or 18a), which is positioned in the optical axis (4) between the mounting abutment surface (6) of the binocular housing (5) and the first deflecting element (9), into the deflecting prism (19) disposed in the binocular housing (5).

7. Inverse microscope according to claim 6, characterised thereby, that in place of the fifth deflecting element (18 or 18a), a sixth deflecting element (20) is arranged outside the optical axis (4) of the microscope and from which the imaging ray bundle falls onto a seventh deflecting element (21), which is arranged in the optical axis (4) between the first deflecting element (9) and the mounting abutmentsurface (6) of the binocular housing (6) at an angle of, for example 67.5° to the optical axis (4) (Fig. 3).

8. Inverse microscope according to one of the preceding claims, characterised thereby, that means for the optical branching-off of a part of the imaging ray bundle are provided within the imaging ray path between the first divider mirror (11) and the binocular housing (5) as well as means for the coupling of separate constructional and functional units, such as projection mount (22), camera attachments (23) and the like, being arranged at or on the microscope base body (G).

9. Inverse microscope according to claim 8, characterised thereby, that the means for the optical branching-off comprise at least one beam splitter (24 or 25), which is additionally tiltable or pushable into the imaging ray path.

10. Inverse microscope according to one of the claims 8 and 9, characterised thereby, that the means for the coupling of superposable or attachable constructional and functional units are arranged on or at the stand arm (A) or at the stand carrier (T) and that these constructional and functional units are optionally connected with the microscope ray path by way of a movable divider mirror (25) as beam splitter which is introduceable into the imaging ray bundle between the fourth deflecting element (16 or 16a) and the deflecting element or elements (18 or 18a or 21) positioned in the optical axis (4) of the mircoscope (Fig. 4).

11. Inverse microscope according to one of the claims 8 to 10, characterised thereby, that the branching-off of a part of the imaging ray bundle takes place by means of a beam splitter (24), which is exchangeably positioned at that place in the intersection of the vertical stand body (T) and the horizontal stand arm (A), at which the fourth deflecting element (16 or 16a) is otherwise arranged (Fig. 3).

12. Inverse microscope according to one of the claims 8 to 10, characterised thereby, that the branching-off of a part of the imaging ray bundle takes place in the region of the stand carrier (T), preferably between the third and the fourth deflecting element (14, 14a, 14b and 16, 16c).

13. Inverse microscope according to at least one of the claims 1 to 4, characterised thereby, that the the stand carrier (T), is integrally constructed with the stand arm (A).

14. Inverse microscope according to at least one of the claims 1 to 4, characterised thereby, that the microscope base body (G) comprising the stand foot (F), the stand carrier (T) and the stand arm (A) is integrally constructed.

15. Inverse microscope according to one of the preceding claims characterised thereby, that means are present for varying the relative spacing between the object table (26) and the objective (1).

16. Inverse microscope according to at least one of the preceding claims, characterised thereby, that an insertable transmitted light illumination unit is provided in the stand arm (A) and an insertable incident light illumination unit is provided in the stand foot (F).

17. Inverse microscope according to claim 16, characterised thereby, that means for an internal energy supply are associated with the illumination units.

18. Inverse microscope according to claim 16, characterised thereby, that means for an external energy supply are associated with the incorporated illumination units.

19. Inverse microscope according to at least one of the preceding claims, characterised thereby, that the stand arm (A) is borne to be pivotable about an axle (29), which co-incides with the axis of that part of the imaging ray bundle, which passes through the stand carrier (T) (Figs. 5a and 5b).

20. Inverse microscope according to claim 19, characterised thereby, that the intersection (30) between the lower part, remaining fixedly located, of the microscope base body (G) and the pivotable upper part thereof lies within that region of the stand carrier (T), the lower boundary of which is given by the object table (26) set to minimum distance from the objective (1) and the upper boundary of which is given by the flanging place (31) for the transmitted light illumination unit (27).

21. Inverse microscope according to at least one of the preceding claims, characterised thereby, that the object table (26) is mounted directly on the stand foot (F) to be displaceable vertically (Fig. 3).

22. Inverse microscope according to one of the claims 20 and 21, characterised thereby, that the intersection (30) is disposed on the upper side of the stand foot (F).

23. Inverse microscope according to at least one of the preceding claims, characterised thereby, that a transmitted light illumination equipment (35), which displays a spacer arm (33) and contains a second condenser (34), is attachable at the flanging place (31) for the transmitted light illumination unit (27) (Fig. 5b).

24. Inverse microscope according to claim 23, characterised thereby, that the means (36) for varying the spacing between the second condenser (34) and the object table (26) are provided, preferably at the transmitted light illumination equipment (35) (Fig. 5b).

25. Inverse microscope according to at least one of the claims 23 and 24, characterised thereby, that means are provided for an internal electrical energy supply of the light source (37) present in the transmitted light illumination equipment (35).

26. Inverse microscope according to one of the preceding claims, characterised thereby, that provided in the stand foot (F) is a mounting (39), which is withdrawable therefrom and associated with means (41, 41a, 44, 44a, 45, 46) for the positionally true reception and displacement of fluorescence units (42 or 43) constructed as constructional and functional units (Fig. 6b).

27. Inverse microscope according to claim 26, characterised thereby, that the fluorescence units (42 or 43) are exchangeably mounted together with an adjustement insert (53), which displays a light-attenuating filter (55), a mirror (56) and a matt plate (54) equipped with a central mark (57), in a receptacle (41) borne to be displaceable transversely (41b) with respect to the optical axis (4).

## Revendications

1. Microscope inverse combiné fonctionnant par éclairement et/ou par transparence comprenant

(a) un pied du statif (F) avec tourelle d'objectifs (1) qui y est posée ou respectivement logée,

(b) un corps du statif (T) avec des moyens pour ajouter des unités de construction optiques,

(c) un bras du statif (A) avec chambre d'oculaire (5) pouvant y être posée ou respectivement logée et système condenseur (2) rapporté ou respectivement logé au côté inférieur du bras de statif (A),

(d) une platine porte-objet (26) affectée au pied du statif ou respectivement au corps du statif,

(e) le corps du statif (T) forme, avec le pied du statif (F) et le bras du statif (A) qui dépasse, un corps de base (G) du microscope en forme de "C",

(f) l'ouverture libre (Öf) du corps de base du microscope (G) est dirigée vers l'observateur (B),

(g) le faisceau lumineux d'éclairage par éclairement (10) et le faisceau lumineux d'observation sont guidés parallèlement l'un à l'autre, à une certaine distance, dans le pied (F) du statif,

(h) le faisceau lumineux d'éclairage par transparence (8) et le faisceau lumineux d'observation sont guidés dans le bras (A) du statif à distance et essentiellement parallèlement l'un à l'autre, (i) le faisceau lumineux partiel (8) passant dans le bras (A) du statif pour l'éclairement par transparence est guidé par un premier élément déviateur (9) disposé dans l'axe optique (4) du microscope et avantageusement placé à 45° de celui-ci, au condenseur (2 ou respectivement 2a),

(k) à la partie supérueure ainsi qu'inférieure du corps de statif (T) sont prévus des moyens électriques et/ou mécaniques (31 ou 32) au dos du corps du statif éloigné de l'observateur, pour la mise en place d'une unité d'éclairage,

(l) l'axe optique (4) établi à travers le condenseur (2, 2a) et l'objectif (1) du microscope traverse la surface de butée de la pièce rapportée (6) d'une chambre de binoculaire, qui est prévue soit au côté supérieur (figure 1a) ou au côté frontal (figure 1b) dirigé vers l'observateur (B) du bras de statif (A).

2. Microscope inverse fonctionnement par transparence comprenant un pied de statif avec tourelle d'objectifs pouvant y être posée ou respectivement logée, un corps du statif avec des moyens pour ajouter des unités de construction optiques, et une platine porte-objet affectée au pied du statif ou respectivement au corps du statif caractérisé en ce que le corps du statif (T) forme, avec le pied (F) du statif et un bras (A) du statif qui dépasse, un corps de base (G) du microscope en forme de "C", dont l'ouverture libre (Öf) du corps de base (G) du microscope est dirigée vers l'observateur (B), le bras du statif (A) présente une chambre d'oculaire (5) pouvant y être posée ou respectivement logée et un système condenseur (2) pouvant être logé ou respectivement ajouté à son côté inférieur, l'axe optique (4) établi à travers le condenseur (2, 2a) et l'objectif (1) du microscope traverse au centre la surface de butée de la pièce rapportée (6) d'une chambre de binoculaire (5), le faisceau lumineux d'éclairage par transparence (8) et le faisceau lumineux d'observation sont guidés parallèlement l'un à l'autre, à une certaine distance, dans le bras (A) du statif, le faisceau partiel (8) passant dans le bras (A) du statif pour l'éclairage par transparence est conduit au condenseur par un premier élément déviateur (9) placé dans l'axe optique (4) du microscope et placé avantageusement à 45° de celui-ci et à la partie supérieure du corps du statif (T) sont prévus, au dos du statif qui est éloigné de l'observateur (B), des moyens électriques et/ou mécaniques (31) pour la mise en place d'une unité d'éclairage (27, figure 3).

3. Microscope inverse selon les revendications 1 à 2 caractérisé en ce que le corps (T) du statif ainsi que l'axe optique (4) sont verticaux et le pied (F) du statif ainsi que le bras (A) du statif qui dépasse sont essentiellement horizontaux et en ce que la vue latérale du corps de base (G) du microscope correspond avantageusement à un "C" à angles droits.

4. Microscope inverse selon l'une quelconque des revendications précédentes caractérisé en ce qu'au lieu de la chambre binoculaire (5) présentant une surface de butée de pièce rapportée ou respectivement d'embase (6 ou respectivement 7), une chambre intermédiaire est prévue avec une surface de butée de pièce rapportée ou d'embase correspondante qui contient des moyens d'accouplement pour la chambre (5) de binoculaire.

5. Microscope inverse selon au moins l'une des revendications 1 à 4 caractérisé en ce que le faisceau lumineux partiel (10) passant dans le pied (F) du statif pour l'éclairage par éclairement est guidé à l'objectif (1) par un miroir diviseur (11) disposé dans l'axe optique (4) du microscope et avantageusement à une position à 45° par rapport à celui-ci (figure 2).

6. Microscope inverse selon au moins l'une quelconque des revendications 1 à 4 caractérisé en ce que le faisceau lumineux d'image sortant de l'objet (3, 3a, 3b), après passage à travers l'objectif (1) et à travers le miroir diviseur (11), rencontre un second élément déviateur (12 ou respectivement 12a) se trouvant dans le pied (F) du statif et disposé dans l'axe optique (4) du microscope et ensuite après passage d'une première optique (13), il rencontre un troisième élément déviateur (14 ou respectivement 14a ou respectivement 14b), d'où il est conduit le long du corps (T) du statif par une deuxième optique (15), à un quatrième élément déviateur (16 ou respectivement 16a) se trouvant dans le bras (A) du statif et après passage d'une troisième optique (17), il est guidé par un cinquième élément déviateur (18 ou respectivement 18a) qui est placé dans l'axe optique (4) entre la surface de butée de pièce rapportée (6) de la chambre de binoculaire (5) et le premier élément déviateur (9), dans le prisme déviateur (19) se trouvant dans la chambre de binoculaire (5).

7. Microscope inverse selon la revendication 6 caractérisé en ce qu'au lieu du cinquième élément déviateur (18 ou respectivement 18a), un sixième élément déviateur (20) est disposé en dehors de l'axe optique (4) du microscope d'où le faisceau lumineux d'image tombe sur un septième élément déviateur (21) qui est disposé dans l'axe optique (4) entre le premier élément déviateur (9) et la surface de butée de pièce rapportée (6) de la chambre (5) du binoculaire, en formant un angle, par exemple de 67,5° avec l'axe optique (4) (figure 3).

8. Microscope inverse selon l'une quelconque des revendications précédentes caractérisé en ce qu'à lieu du l'intérieur de la trajectoire du faisceau d'image entre le premier miroir diviseur (11) et la chambre de binoculaire (5) sont prévus des moyens pour la dérivation optique d'une partie du faisceau lumineux d'image ainsi que des moyens pour le couplage d'unités séparées de construction et de fonction comme une pièce rapportée de projection (22), des embases de caméra (23) et analogues qui sont respectivement disposés contre ou respectivement sur le corps de base (G) du microscope.

9. Microscope inverse selon la revendication 8 caractérisé en ce que les moyens pour la dérivation optique comprennent au moins un diviseur de rayons (24 ou respectivement 25) qui de plus peut être rabattu ou respectivement inséré dans la trajectoire du faisceau d'image.

10. Microscope inverse selon l'une des revendications 8 ou 9 caractérisé en ce que les moyens pour le couplage d'unités de construction ou de fonction pouvant être logées ou respectivement posées sont disposés respectivement sur le bras (A) du statif ou sur le corps (T) du statif et en ce que ces unités de construction et de fonction sont reliées par un miroir diviseur mobile (25) en tant que diviseur des rayons, qui peut être inséré entre le quatrième déviateur (16 ou respectivement 16a) et le (les) élément(s) déviateur(s) placé(s) dans l'axe optique (4) du microscope (18 ou respectivement 18a ou respectivement 21) dans le faisceau lumineux d'image, de manière optique, à la trajectoire des rayons microscopiques (figure 4).

11. Microscope inverse selon l'une des revendications 8 à 10 caractérisé en ce que la dérivation d'une partie du faisceau lumineux d'image se produit au moyen d'un diviseur de rayons (24) qui est placé de manière échangeable en tout lieu au point de coupe du corps vertical du statif et du bras horizontal (A) du statif, où est autrement disposé le quatrième élément déviateur (16 ou respectivement 16a) (figure 3).

12. Microscope inverse selon l'une des revendications 8 à 10 caractérisé en ce que la dérivation d'une partie du faisceau lumineux d'image dans la zone du corps (T) du statif se produit avantageusement entre le troisième et le quatrième élément déviateur (14, 14a, 14b et 16, 16a).

13. Microscope inverse selon au moins l'une des revendications 1 à 4 caractérisé en ce que le corps (T) du statif est formé en une pièce avec le bras (A) du statif.

14. Microscope inverse selon au moins l'une des revendications 1 à 4 caractérisé en ce que le corps de base (G) du microscope comprenant le pied (F) du statif, le corps (T) du statif et le bras (A) du statif est formé en une pièce.

15. Microscope inverse selon l'une quelconque des revendications précédentes caractérisé en ce que des moyens sont prévus pour modifier la distance relative entre la platine porte-objet (26) et l'objectif (1).

16. Microscope inverse selon au moins l'une des revendications précédentes caractérisé en ce que sont prévues dans le bras (A) du statif, une unité d'éclairage par transparence qui peut y être insérée et dans le pied (F) du statif, une unité d'éclairage par éclairement qui peut y être insérée.

17. Microscope inverse selon la revendication 16 caractérisé en ce qu'aux unités d'éclairage sont affectés des moyens pour une alimentation en énergie interne.

18. Microscope inverse selon la revendication 16 caractérisé en ce qu'aux unités incorporées d'éclairage sont affectés des moyens pour une alimentation en énergie externe.

19. Microscope inverse selon au moins l'une des revendications précédentes caractérisé en ce que le bras (A) du statif est logé pivotant autour d'un axe (29) qui correspond avec l'axe de la partie du faisceau lumineux d'image traversant le corps (T) du statif (figures 5a, 5b).

20. Microscope inverse selon la revendication 19 caractérisé en ce que le lieu de coupe (30) entre la partie inférieure stationnaire du corps de base (G) du microscope et sa partie supérieure pivotante se trouve à l'intérieur de la zone du corps (T) du statif dont la limite inférieure est donnée par la platine porte-objet (26) disposée à sa distance minimale de l'objectif (1) et dont la limite supérieure est donnée par le point de raccordement (31) de l'unité d'éclairement par transparence (27).

21. Microscope inverse selon au moins l'une des revendications précédentes caractérisé en ce que la platine porte-objet (26) est retenue réglable en hauteur directement sur le pied (F) du statif (figure 3).

22. Microscope inverse selon l'une des revendications 20 ou 21 caractérisé en ce que le lieu de coupe (30) se trouve sur le côté supérieur du pied (F) du statif.

23. Microscope inverse selon au moins l'une des revendications précédentes caractérisé en ce qu'au lieu de raccordement (31) pour l'unité d'éclairage par transparence (27) peut être ajouté un système d'éclairage par transparence (35) présentant un bras d'écartement (33) et contenant un second condenseur (34) (figure 5b).

24. Microscope inverse selon la revendication 23 caractérisé en ce que des moyens (36) sont avantageusement prévus sur le système d'éclairage par transparence (35), pour la modification de la distance entre le second condenseur (34) et la platine porte-objet (26) (figure 5b).

25. Microscope inverse selon au moins l'une des revendications 23 ou 24 caractérisé en ce que des moyens sont prévus pour une alimentation en énergie électrique interne de la source de lumière (37) présente dans le système d'éclairement par transparence (35).

26. Microscope inverse selon l'une des revendications précédentes caractérisé en ce qu'une fixation (39) est prévue dans le pied (F) du statif, qui peut en être retirée, à laquelle sont affectés des moyens (41, 41a, 44, 44a, 45, 46) pour la réception en bonne position et le déplacement d'unités à fluorescence ayant la forme d'unités de construction et de fonctionnement (42 ou respectivement 43) (figure 6b).

27. Microscope inverse selon la revendication 26 caractérisé en ce que les unités à fluorescence (42 ou respectivement 43), avec une pièce d'ajustage (53) présentant un filtre d'amortissement de la lumière (55), un miroir (56) et un verre dépoli (54) équipé d'une marque centrale (57) sont maintenues de manière échangeable dans un récepteur (41) logé mobile transversalement (41b) relativement à l'axe optique (4).

*Fig. 1a*

*Fig. 1b*

*Fig. 2*

Fig. 3

Fig. 4

16

EP 0 086 814 B2

Fig. 6a

Fig. 6b

Fig. 6c

Fig. 5a

Fig. 5b